# EUROPEAN PATENT APPLICATION

(11) **EP 3 770 480 A1**
(43) Date of publication of application: **27.01.2021**
(21) Application number: 20194859.3
(22) Date of filing: 27.06.2014
(51) Int. Cl.: F16M 11/04, F16M 11/16, G03B 17/56, F16M 13/04, B64D 47/08, F16M 11/20, F16M 11/18, F16M 11/24

(54) **TRIPOD HEAD STRUCTURE AND GEAR ADJUSTMENT MECHANISM THEREOF**

(62) Divisional of application: 14896139.4
(71) Applicant: SZ DJI Osmo Technology Co., Ltd., Shenzhen, Guangdong 518057 (CN)
(72) Inventor: PAN, Paul, Shenzhen, Guangdong 518057 (CN); LIU, Hao, Shenzhen, Guangdong 518057 (CN); ZHAO, Tao, Shenzhen, Guangdong 518057 (CN); KIM, Min, Shenzhen, Guangdong 518057 (CN); ZHAO, Yanchong, Shenzhen, Guangdong 518057 (CN)
(74) Representative: Appelt, Christian W.

(57) **Abstract**

The present disclosure provides a gimbal structure (100), comprising a support frame (10) and a center of gravity adjusting device connected with the support frame. The support frame may comprise a roll-axis support (12), a yaw-axis vertical bar (14) and a yaw-axis horizontal bar (16) carried on the yaw-axis vertical bar; the center of gravity adjusting device may slide the yaw-axis horizontal bar relative to the yaw-axis vertical bar in order to adjust the center of gravity of the gimbal structure. The center of gravity adjusting device may comprise a quick release mechanism comprising a quick release buckle (341), a slider and a screw connecting the slide with the quick release buckle; the quick release buckle may be mounted on one side of the yaw-axis vertical bar; the slider may be mounted between the yaw-axis vertical bar and the yaw-axis horizontal bar.

## Description

### TECHNICAL FIELD

The present disclosure relates to a supporting structure for optical devices, and particularly to a gimbal structure for supporting optical devices and a gear adjusting mechanism thereof.

### BACKGROUND OF THE DISCLOSURE

A gimbal structure may be used to support optical devices such as a video camera, a camera, a telescope, a telescope video camera, a measuring instrument and the like. Operations of such optical devices may require the gimbal structure to stably support the optical devices and easily adjust an orientation thereof.

The center of gravity of a gimbal structure may be adjusted to satisfy different shooting angles of a camera. In existing methods, the center of gravity of a gimbal structure may be adjusted by firstly sliding a supporting plate on which the camera is fixed along a roll-axis support which carries the supporting plate, and then locking the supporting plate on the roll-axis support by a screw. However, a specific tool has to be used in this center of gravity adjusting method and the center of gravity of the gimbal structure may not be adjusted in a timely and convenient manner.

### SUMMARY OF THE DISCLOSURE

In view of the existing problem in the art, there is a need to provide a gimbal structure capable of adjusting the center of gravity in a timely manner without the aid of tools, and a gear adjusting mechanism thereof.

The embodiments of the disclosure provides a gimbal structure, comprising a support frame and a center of gravity adjusting device connected with the support frame; the support frame may comprise a roll-axis support, a yaw-axis vertical bar and a yaw-axis horizontal bar carried on the yaw-axis vertical bar, the center of gravity adjusting device may slide the yaw-axis horizontal bar relative to the yaw-axis vertical bar to adjust the center of gravity of the gimbal structure; the center of gravity adjusting device may comprise a quick release mechanism comprising a quick release buckle, a slider and a screw connecting the slider with the quick release buckle; the quick release buckle may be mounted on one side of the yaw-axis vertical bar; the slider may be mounted between the yaw-axis vertical bar and the yaw-axis horizontal bar; and the center of gravity adjusting device may be locked when the quick release buckle is fastened and the slider is abutted between the yaw-axis vertical bar and the yaw-axis horizontal bar; and the center of gravity adjusting device may be adjustable when the quick release buckle is unfastened and the slider is released from the yaw-axis vertical bar and the yaw-axis horizontal bar.

The embodiments of the disclosure also provides a gear adjusting mechanism comprising a gear, a gear rotating shaft connected to the gear, adjusting knobs provided at two ends of the gear rotating shaft, and a rack engaged with the gear; the gear adjusting mechanism may further comprise a gear fixing member, the gear fixing member may comprise a head and two side walls extending from the head; an opening may be formed between the two side walls; the gear may be received in the opening; the gear rotating shaft may be rotatably connected on the two side walls; and the gear may be rotated by rotating the adjusting knobs to move the rack.

In some embodiments, the quick release buckle may comprise a rotating shaft and a rotating body sleeved on an outer peripheral of the rotating shaft; the rotating body may be eccentric such that a center of the rotating body does not coincide with a center of the rotating shaft.

In some embodiments, the quick release buckle may further comprise a lug; the rotating body may have a maximum radius and a minimum radius; the lug may extend outward from a side of the rotating body away from the center of the rotating body; with the lug being pulled, the rotating body may rotate around the rotating shaft from a portion having the maximum radius to a portion having the minimum radius.

In some embodiments, the quick release mechanism may further comprise a screw; the screw may be inserted into the rotating shaft of the quick release buckle in a direction perpendicular to a side surface of the yaw-axis horizontal bar; the slider may be connected to an end of the screw; with the lug being pulled, the screw may drive the slider to move inward such that the slide is released from the yaw-axis vertical bar and the yaw-axis horizontal bar.

In some embodiments, two clamping arms may be provided at a top end of the yaw-axis vertical bar; the yaw-axis horizontal bar may be received between the two clamping arms and carried on the top end of the yaw-axis vertical bar.

In some embodiments, a first groove and a second groove spaced apart from each other may be provided on an inner surface of each clamping arm facing the other clamping arm; a boss may be provided at a lower end of the yaw-axis horizontal bar; the slider may comprise a horizontal block and a vertical block; the horizontal block may be received in the first groove, and the boss may be received in the second grooves of the two clamping arms.

In some embodiments, a recess may be provided on a side surface of the yaw-axis horizontal bar; the vertical block may be received in the recess; when the center of gravity adjusting device is locked by the quick release mechanism, the slider may be abutted between the recess of the yaw-axis horizontal bar and the clamping arm.

In some embodiments, a bottom surface of the recess of the yaw-axis horizontal bar may be a slant surface; a bottom surface of the vertical block of the slider may be an inclined surface having the same inclination angle as that of the slant surface; when the slider is received in the recess, the inclined surface of the slider may be slidable relative to the slant surface of the recess of the yaw-axis horizontal bar, so as to abut the horizontal block of the slider in the first groove of the clamping arm to fix the slider and lock the yaw-axis horizontal bar and the clamping arm.

In some embodiments, the gimbal structure may further comprise a gear adjusting mechanism which comprising a gear, a gear rotating shaft connected to the gear and adjusting knobs disposed at two ends of the gear rotating shaft; an upper surface of the yaw-axis horizontal bar may be provided with a rack with which the gear engages; and the gear may be rotated by rotating the adjusting knobs to move the yaw-axis horizontal bar relative to the yaw-axis vertical bar.

In some embodiments, the gear adjusting mechanism may further comprise a gear fixing member fixed at a top end of the yaw-axis vertical bar; the gear fixing member may comprise a head and two side walls; an opening may be formed between the two side walls, and the gear may be received in the opening.

In some embodiments, the support frame may be rotatably connected with the center of gravity adjusting device through a first motor; the first motor may be mounted at a bottom end of the yaw-axis vertical bar of the support frame.

In some embodiments, the gimbal structure may further comprise a handheld frame; the handheld frame may be rotatably connected with the center of gravity adjusting device through a second motor, the second motor may be mounted at the other end of the yaw-axis horizontal bar of the center of gravity adjusting device which is away from the yaw-axis vertical bar.

In some embodiments, the handheld frame may comprise a horizontal rod and handles mounted on the horizontal rod.

In some embodiments, the handheld frame may comprise three handles, two of which may be mounted respectively at two ends of the horizontal rod, and the remaining one may be mounted at a middle portion of the horizontal rod.

Aspects of the present disclosure provides a gimbal structure comprising a support frame, the support frame may comprise a roll-axis support, a yaw-axis vertical bar and a yaw-axis horizontal bar carried on the yaw-axis vertical bar; and the gimbal structure may further comprise a gear adjusting mechanism which comprising a gear, a gear rotating shaft connected to the gear and adjusting knobs provided at two ends of the gear rotating shaft; an upper surface of the yaw-axis horizontal bar may be provided with a rack with which the gear engages; and the gear may be rotated by rotating the adjusting knobs to move the yaw-axis horizontal bar relative to the yaw-axis vertical bar.

In some embodiments, the gear adjusting mechanism may further comprise a gear fixing member provided at a top end of the yaw-axis vertical bar; the gear fixing member may comprise a head and two side walls; an opening may be formed between the two side walls, and the gear may be received in the opening.

The gimbal structure according to embodiments of the present disclosure may employ a quick release mechanism to adjust the center of gravity adjusting device. In some embodiments, the yaw-axis horizontal bar may be locked to or released from the yaw-axis vertical bar of the support frame by manipulating the lug of the quick release mechanism. For instance, when the center of gravity of the gimbal structure is to be fixed, the operator may fasten the lug of the quick release mechanism, such that the **343** of the quick release mechanism may abut against the clamping arm of the yaw-axis vertical bar and the yaw-axis horizontal bar to prevent a relative moment of the yaw-axis horizontal bar relative to the yaw-axis vertical bar. When the center of gravity of the gimbal structure is to be adjusted, the operator may unfastened the lug of the quick release mechanism, such that the slider of the quick release mechanism may slide towards the yaw-axis horizontal bar to release the slider from the clamping arm of the yaw-axis vertical bar and the yaw-axis horizontal bar. The yaw-axis horizontal bar may be released from the yaw-axis vertical bar such that they are movable relative to each other. The center of gravity adjusting device may be locked and released by aforementioned quick release mechanism without the aid of additional tools; therefore, the center of gravity adjusting device may timely adjust the center of gravity of the gimbal structure.

### BRIEF DESCRIPTION OF THE DRAWINGS

**FIG. 1** is a perspective view of a gimbal structure according to an embodiment of the present disclosure.
**FIG. 2** is a perspective view showing a connection structure of a center of gravity adjusting device and a yaw-axis vertical bar of a support frame of the gimbal structure in **FIG. 1****.**
**FIG. 3** is an exploded perspective view of the center of gravity adjusting device and the yaw-axis vertical bar of the support frame in **FIG. 2****.**
**FIG. 4** is a rear view of the center of gravity adjusting device and the yaw-axis vertical bar of the support frame in **FIG. 2****.**
**FIG. 5** is a top view of a quick release of the center of gravity adjusting device in **FIG. 4****.**

**LIST OF REFERRALS**

| | |
|---|---|
| Gimbal structure | 100 |
| Support frame | 10 |
| Roll-axis support | 12 |
| Yaw-axis vertical bar | 14 |
| Clamping arm | 141 |
| First groove | 1411 |
| Second groove | 1412 |
| Yaw-axis horizontal bar | 16 |
| Upper surface | 161 |
| Lower surface | 162 |
| Side surface | 163 |
| Rack | 164 |
| Boss | 165 |
| Recess | 166 |
| Slant surface | 167 |
| First motor | 17 |
| Power supply device | 18 |
| Shooting device | 20 |
| Center of gravity adjusting device | 30 |
| Gear adjusting mechanism | 32 |
| Gear fixing member | 321 |
| Head | 3211 |
| Side wall | 3212 |
| Opening | 3213 |
| Stepped hole | 3214 |
| Fastener | 3215 |
| Gear | 322 |
| Gear rotating shaft | 323 |
| Adjusting knob | 324 |
| Quick release mechanism | 34 |
| Quick release buckle | 341 |
| Rotating shaft | 3411 |
| Rotating body | 3412 |
| Lug | 3413 |
| Through-hole | 3414 |
| Screw | 342 |
| Slider | 343 |
| Horizontal block | 3431 |
| Vertical block | 3432 |
| Inclined surface | 3433 |
| Threaded hole | 3434 |
| Copper gasket | 344 |
| Silicone gasket | 345 |
| Second motor | 36 |
| Handheld frame | 40 |
| Horizontal rod | 42 |
| Handle | 44 |

The present disclosure will be further illustrated in the following detailed description with reference to the drawings.

### DETAILED DESCRIPTION OF THE DISCLOSURE

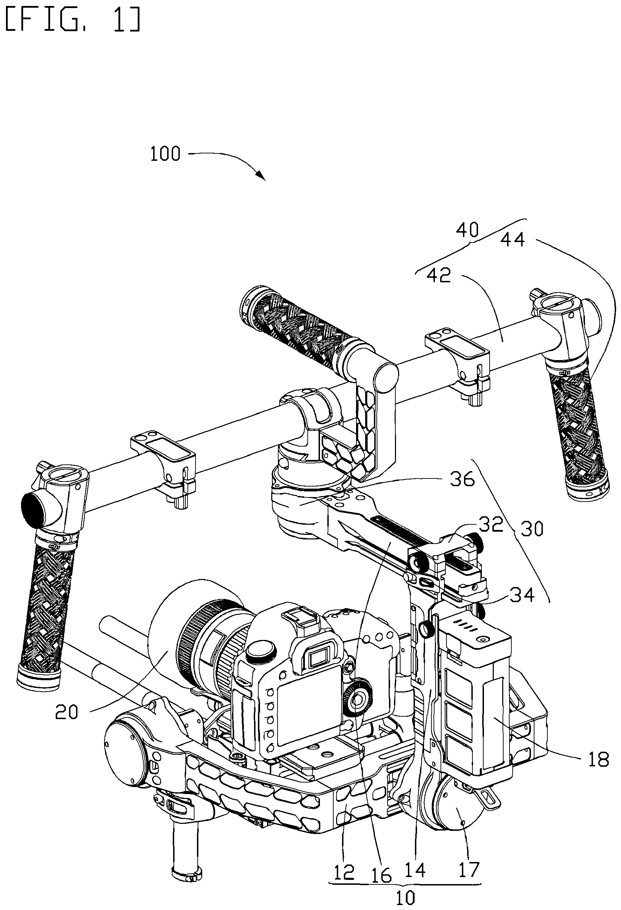

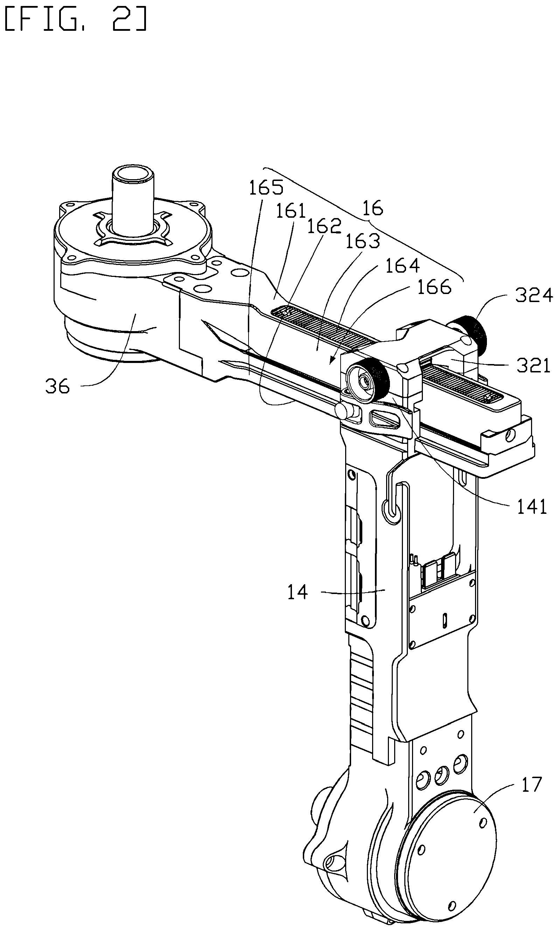

Referring to **Figs. 1** to **3****,** a gimbal structure **100** according to an embodiment of the present disclosure may comprise a support frame **10** for mounting a shooting device **20,** a center of gravity adjusting device **30** and a handheld frame **40.** The support frame **10** and the handheld frame **40** may be connected to each other through the center of gravity adjusting device **30.** The center of gravity of the gimbal structure **100** may be adjusted by the center of gravity adjusting device **30.**

In some embodiments, the support frame **10** may comprise a roll-axis support **12,** a yaw-axis vertical bar **14, a** yaw-axis horizontal bar **16** and a first motor **17** rotatably connecting the roll-axis support **12** and the yaw-axis vertical bar **14.** The roll-axis support **12** may be provided at a lower side of the gimbal structure **100.** The shooting device **20** may be mounted within the roll-axis support **12.** A plane of the roll-axis support **12** may be perpendicular to the yaw-axis vertical bar **14** in an initial state. A shooting angle of the shooting device **20** in the initial state may be an initial viewing angle. A top end of the yaw-axis vertical bar **14** may be provided with two clamping arms **141** with which the center of gravity adjusting device **30** may be connected. The first motor **17** may be mounted at a bottom end of the yaw-axis vertical bar **14** and rotatably connected with the roll-axis support **12.** A power supply device **18** may be provided on the yaw-axis vertical bar **14.** The power supply device **18** may drive a rotation of a rotating shaft of the first motor **17** to rotate the roll-axis support **12** around a central axis of the first motor **17.** When rotating, an angle of the roll-axis support **12** with respect to the central axis of the first motor **17** may vary, such that a shooting angle of the shooting device **20** mounted on the roll-axis support **12** may vary correspondingly.

In some embodiments, the clamping arms **141** may be formed by extending upward from the top end of the yaw-axis vertical bar **14.** The two clamping arms **141** may be spaced apart from each other. Two grooves, for instance a first groove **1411** and a second groove **1412,** may be provided on an inner surface of each clamping arm **141** facing the other clamping arm **141.** The first groove **1411** and second groove **1412** may be spaced apart from each other. The first groove **1411** may be disposed distal to the yaw-axis vertical bar **14,** and the second groove **1412** may be disposed proximal to the yaw-axis vertical bar **14.**

The yaw-axis horizontal bar **16** may be connected to the yaw-axis vertical bar **14** of the support frame **10.** In some embodiments, the yaw-axis horizontal bar **16** may be fitted with the clamping arms **141** at the top end of the yaw-axis vertical bar **14.** The yaw-axis horizontal bar **16** may comprise an upper surface **161,** a lower surface **162** and two side surfaces **163.** The upper surface **161** may be parallel to the lower surface **162,** and the two side surfaces **163** may be respectively connected to edges of the upper surface **161** and lower surface **162.** The upper surface **161** may be provided with a rack **164** which is arranged along an extending direction of the yaw-axis horizontal bar **16.** A bottom of the yaw-axis horizontal bar **16** may be provided with a boss **165** having a width larger than a distance between the two side surfaces **163.** A recess **166** extending vertically from the upper surface **161** to the lower surface **162** may be provided on each of the two side surfaces **163** of the yaw-axis horizontal bar **16.** A bottom surface of the recess **166** may be a slant surface **167.** An angle between the slant surface **167** and the side surface **163** may be an acute angle. In some embodiments, the angle between the slant surface **167** and side surface **163** may be 60°. The yaw-axis horizontal bar **16** may be received between the two clamping arms **141** of the yaw-axis vertical bar **14.** The lower surface **162** of the yaw-axis horizontal bar **16** may be carried on the yaw-axis vertical bar **14.** The boss **165** of the yaw-axis horizontal bar **16** may be received in the second grooves **1412** of the two clamping arms **141.** A distance between a side surface **163** and a bottom of a corresponding first groove **1411** may be D1.

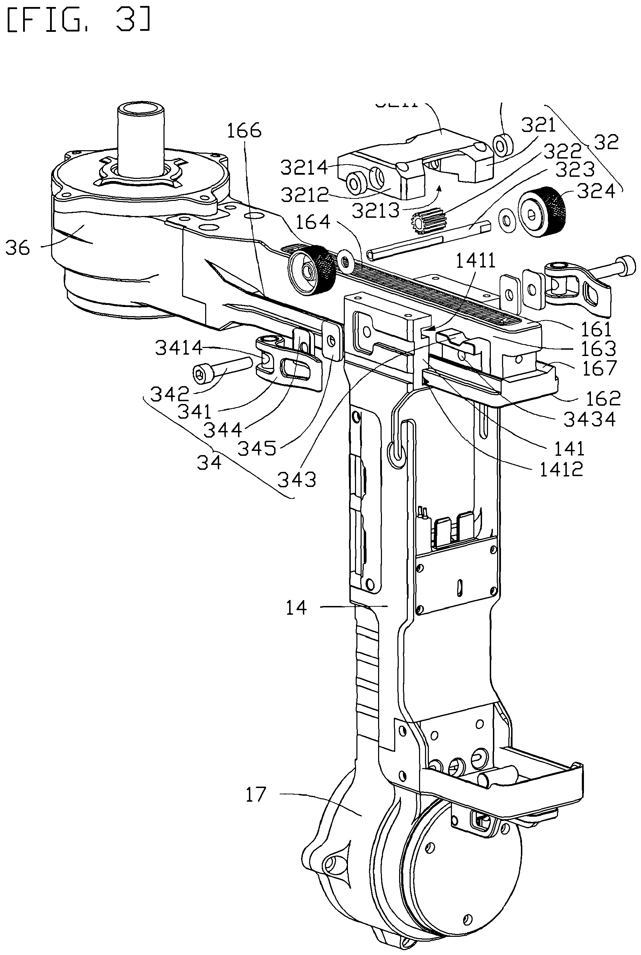

Referring to **FIGs. 3** to **4****,** the center of gravity adjusting device **30** may comprise a gear adjusting mechanism **32** engagingly connected with the yaw-axis horizontal bar **16,** a quick release mechanism **34** for tightening and loosening the gear adjusting mechanism **32,** and a second motor **36** for pivotally connecting the center of gravity adjusting device **30** to the handheld frame **40.**

The gear adjusting mechanism **32** may be engagingly connected to the yaw-axis horizontal bar **16.** The gear adjusting mechanism **32** may comprise a gear fixing member **321,** a gear **322,** a gear rotating shaft **323** and adjusting knobs **324.** The gear fixing member **321** may be configured to connect the gear rotating shaft **323** and receive the gear **322,** and may be secured to a top end of the clamping arms **141** of the yaw-axis vertical bar **14.** The gear fixing member **321** may comprise a head **3211** and two side walls **3212.** The two side walls **3212** may be formed by extending downward from opposing sides of the head **3211,** thus forming an opening **3213** between the two side walls **3212** for receiving the gear **322.** Each of the side walls **3212** may be provided with a stepped hole **3214.** The two stepped holes **3214** may be disposed coaxially. Two ends of the gear rotating shaft **323** may be respectively inserted and rotated in the stepped holes **3214.** In some embodiments, the gear **322** may be assembled by the following steps. Firstly, one end of the gear rotating shaft **323** may penetrate into the opening **3213** from one of the stepped holes **3214** formed on one of the side walls **3212** of the gear adjusting mechanism **32.** Then, the gear **322** may be placed in the opening **3213** and penetrated by the one end of the gear rotating shaft **323.** Next, the one end of the gear rotating shaft **323** may penetrate into the other one of the stepped holes **3214** formed on the other one of the side walls **3212.** Finally, fasteners **3215** may be provided to fit the gear rotating shaft **323.** The fasteners **3215** may be ratable in the stepped holes **3214** such that the gear rotating shaft **323** may be rotatably connected with the gear fixing member **321.** Two ends of the gear rotating shaft **323** may be exposed from the outer peripheral of the two side walls **3212.** In some instances, two adjusting knobs **324** may be provided and respectively mounted to the two ends of the gear rotating shaft **323** which are exposed from the outer peripheral of the side walls **3212.** The gear rotating shaft **323** may be rotated by rotating the adjusting knobs **324,** such that the gear **322** is rotated. Due to an engagement between the rack **164** and the gear **322,** the yaw-axis horizontal bar **16** may move back and forth in an extending direction of the rack **164** while the gear **322** is rotated.

In some embodiments, the quick release mechanism **34** may comprise a quick release buckle **341,** a screw **342** connected with the quick release buckle **341,** and a slider **343** connected with the screw **342.**

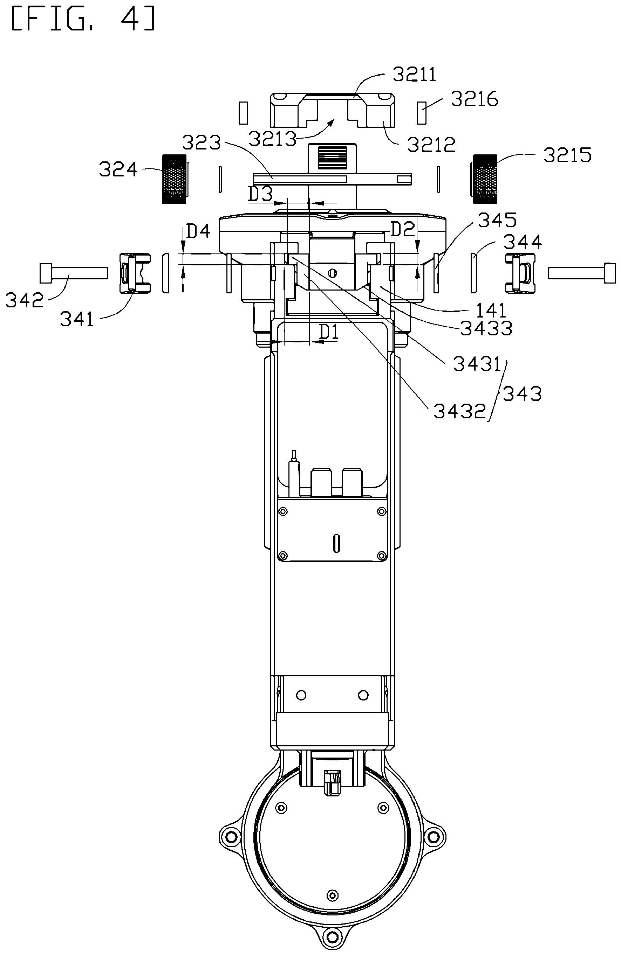

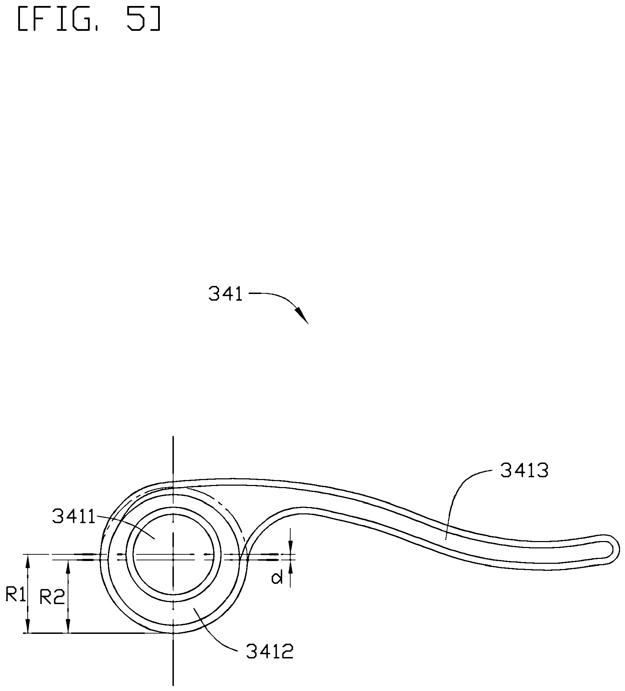

Referring to **FIG. 5****,** the quick release buckle **341** may comprise a rotating shaft **3411,** a rotating body **3412** and a lug **3413.** The rotating body **3412** may be sleeved on an outer peripheral of the rotating shaft **3411.** The rotating body **3412** may be a cylinder and configured to be eccentric with the rotating shaft **3411.** For instance, a center of the rotating shaft **3411** may not coincide with a center of the rotating body **3412.** The center of the rotating shaft **3411** may deviate from the center of the rotating body **3412** by a distance d, such that the rotating body **3412** may have a maximum radius R1 and a minimum radius R2, R1>R2. The lug **3413** may extend outward from a side of the rotating body **3412** away from the center of the rotating body **3412.** In some embodiments, the lug **3413** may be formed in a streamlined shape. An extending direction of the lug **3413** may be substantially perpendicular to a virtual line connecting the center of the rotating shaft **3411** and the center of the rotating body **3412.** For instance, the extending direction of the lug **3413** may be substantially perpendicular to an extending line of the maximum radius R1 of the rotating body **3412.** The rotating shaft **3411** may be provided with a through-hole **3414** through which the screw **342** (as shown in **FIG. 4**) may penetrate. When the lug **3413** is manipulated, the rotating body **3412** may rotate around the rotating shaft 3411 such that the rotating body **3412** may rotate from the maximum radius to the minimum radius.

Referring again to **FIGs. 3** and **4****,** the slider **343** may be substantially in a "7" shape and comprise a horizontal block **3431** and a vertical block **3432** which are substantially perpendicular to each other. A width of the horizontal block **3431** may be D3, which may be smaller than D1 which is the distance between a side surface **163** and the bottom of a corresponding first groove **1411,** i.e., D3<D1, such that the slider **343** may be movable in a width direction by a certain distance. A height of the horizontal block **3431** may be D4, which may be less than a height D2 of the first groove **1411,** i.e., D4<D2, such that the slider **343** may be movable in a height direction by a certain distance. A bottom surface of the vertical block **3432** may be an inclined surface **3433** having the same inclination angle as that of the slant surface **167** of the recess **166** of the yaw-axis horizontal bar **16.** The slider **343** may be displaced in the width and height directions by sliding the inclined surface **3433** in the recess **166** of the yaw-axis horizontal bar **16.** The vertical block **3432** may be provided with a threaded hole **3434** through which the screw **342** of the quick release mechanism **34** may penetrate and connect the slider **343** with the quick release buckle **341.** While assembling the quick release mechanism **34,** the vertical block **3432** of the slider **343** may be attached to the side surface **163** of the yaw-axis horizontal bar **16,** and the horizontal block **3431** may be received in the first groove **1411** of the clamping arm **141** of the yaw-axis vertical bar **14;** then, the screw **342** of the quick release mechanism **34** may successively penetrate through the quick release buckle **341** and the clamping arm **141** and finally threadedly engage with the slider **343** in order to secure the quick release buckle **341** on one side of the clamping arm **141.** A number of gaskets may be provided between the quick release buckle **341** and the clamping arm **141** to facilitate the manipulating of the quick release mechanism **34** and reduce a friction. In some embodiments, a copper gasket **344** and a silicone gasket **345** may be provided between the quick release buckle **341** and the clamping arm **141.** The side of the copper gasket **344** facing the rotating body **3412** of the quick release buckle **341** may be a curved surface.

When the quick release mechanism **34** is operated into a tighten state, the quick release buckle **341** of the quick release mechanism **34** may be manipulated to be placed at one side of the clamping arm **141** of the yaw-axis vertical bar **14.** In this state, the rotating body **3412** of the quick release buckle **341** may abut against the clamping arm **141** at a portion having the maximum radius, such that the slider **343** is driven by the screw **342** of the quick release mechanism **34** to abut against a corresponding clamping arm **141.** In some embodiments, the slider **343** may slide outward along the slant surface **167** of the recess **166** of the yaw-axis horizontal bar **16** by virtue of a mating of the inclined surface **3433** of the slider **343** with the slant surface **167** of the recess **166,** until the vertical block **3432** of the slider **343** abuts against the clamping arm **141** and a top end of the horizontal block **3431** abuts against an upper wall of the first groove **1411** of the clamping arm **141.** Under this state, the slider **343** may be locked onto the clamping arm **141** such that the yaw-axis horizontal bar **16** may be fixed with the yaw-axis vertical bar **14.**

When the quick release mechanism **34** is operated into a loosened state, the lug **3413** of the quick release buckle **341** of the quick release mechanism **34** may be manipulated to be substantially perpendicular to the clamping arm **141** of the yaw-axis vertical bar **14.** The portion of the rotating body **3412** of the quick release buckle **341,** which abuts against the clamping arm **141,** may shift gradually from the portion having the maximum radius to a portion having the minimum radius, until the rotating body **3412** of the quick release buckle **341** abuts against the clamping arm **141** at the portion having the minimum radius thereof, such that the slider **343** may be driven by the screw **342** of the quick release mechanism **34** to slide inward. In some embodiments, the slider **343** may slide inward along the slant surface **167** of the recess **166** of the yaw-axis horizontal bar **16** by virtue of a mating of the inclined surface **3433** of the slider **343** with the slant surface **167** of the recess **166**the slider **343,** to loosen the vertical block **3432** of the slider **343** from the slant surface **167** of the recess **166** of the yaw-axis horizontal bar **16** and loosen the horizontal block **3431** from the upper wall of the first groove **1411** of the clamping arm **141.** In the loosened state, the horizontal block **3431** of the slider **343** may not abut against the clamping arm **141,** and the vertical block **3432** may not abut against the yaw-axis horizontal bar **16,** such that the slider **343** may be released from the clamping arm **141** and the yaw-axis horizontal bar **16.** In the loosened state, the gear **322** may engage the rack **164** on the yaw-axis horizontal bar **16** by rotating the adjusting knobs **324** of the gear adjusting mechanism **32.** By virtue of the engagement, the yaw-axis horizontal bar **16** may slide with respect to the clamping arms **141,** such that the center of gravity of the entire gimbal structure **100** may be adjusted.

The other end of the center of gravity adjusting device **30** may be connected to the second motor **36** through which and the handheld frame **40** may be rotatably connected with the center of gravity adjusting device **30.** In some embodiments, the handheld frame **40** may comprise a horizontal rod **42** and a plurality of handles **44** mounted on the horizontal rod **42.** In some instances, three handles **44** may be provided, two of which may be respectively provided at two ends of the horizontal rod **42,** and the remaining one may be provided at a middle portion of the horizontal rod **42.** The horizontal rod **42** may be rotatably connected with the center of gravity adjusting device **30** through the second motor **36.**

The gimbal structure **100** according to embodiments of the present disclosure may employ a quick release mechanism **34** to adjust the center of gravity adjusting device **30.** In some embodiments, the yaw-axis horizontal bar **16** may be locked to or released from the yaw-axis vertical bar **14** of the support frame **10** by manipulating the lug **3413** of the quick release mechanism **34.** For instance, when the center of gravity of the gimbal structure **100** is to be fixed, the operator may fasten the lug **3413** of the quick release mechanism **34,** such that the slider **343** of the quick release mechanism **34** may abut against the clamping arm **141** of the yaw-axis vertical bar **14** and the yaw-axis horizontal bar **16** to prevent a relative moment of the yaw-axis horizontal bar **16** relative to the yaw-axis vertical bar **14.** When the center of gravity of the gimbal structure **100** is to be adjusted, the operator may unfastened the lug **3413** of the quick release mechanism **34,** such that the slider **343** of the quick release mechanism **34** may slide towards the yaw-axis horizontal bar **16** to release the slider **343** from the clamping arm **141** of the yaw-axis vertical bar **14** and the yaw-axis horizontal bar **16.** The yaw-axis horizontal bar **16** may be released from the yaw-axis vertical bar **14** such that they are movable relative to each other. The center of gravity adjusting device **30** may be locked and released by aforementioned quick release mechanism **34** without the aid of additional tools; therefore, the center of gravity adjusting device **30** may timely adjust the center of gravity of the gimbal structure **100.** Furthermore, a gear adjusting mechanism **32** may be further employed in embodiments of the present disclosure. The yaw-axis horizontal bar **16** may be moved back and forth in the arrangement direction of the rack **164** by an engagement between the gear **322** and the rack **164.** A precise adjustment of the center of gravity of the gimbal structure **100** may be achieved without relying on an operator's experience or intuition.

Embodiments of the present disclosure may further provide a gimbal structure, which may comprise a support frame and a gear adjusting mechanism. The support frame may comprise a roll-axis support, a yaw-axis vertical bar and a yaw-axis horizontal bar carried on the yaw-axis vertical bar. The gear adjusting mechanism may comprise a gear, a gear rotating shaft connecting the gear and adjusting knobs disposed at two ends of the gear rotating shaft. An upper surface of the yaw-axis horizontal bar may be provided with a rack with which the gear may engage. The gear may be rotated by rotating the adjusting knobs to move the yaw-axis horizontal bar relative to the yaw-axis vertical bar.

In some embodiments, the gear adjusting mechanism may further comprise a gear fixing member which is fixed at a top end of the yaw-axis vertical bar. The gear fixing member may comprise a head and two side walls. An opening may be formed between the two side walls, and the gear may be received in the opening.

A connecting of the gear adjusting mechanism with other components of the gimbal structure are described in the aforementioned embodiments and drawings.

It may be appreciated that various modifications and variations may be possible to those having ordinary skill in the art based on the technical concept of the present disclosure, and all these modifications and variations shall fall into the scope of the disclosure as defined by the appended claims.
Various embodiments have been described. The present invention may also (alternatively) be described by the below numbered aspects 1 to 17.

### ASPECTS

1. A gimbal structure, said gimbal structure comprising a support frame and a center of gravity adjusting device connected with the support frame,
   wherein the support frame comprises a roll-axis support, a yaw-axis vertical bar and a yaw-axis horizontal bar carried on the yaw-axis vertical bar, the center of gravity adjusting device slides the yaw-axis horizontal bar relative to the yaw-axis vertical bar to adjust the center of gravity of the gimbal structure;
   wherein the center of gravity adjusting device comprises a quick release mechanism comprising a quick release buckle, a slider and a screw connecting the slider with the quick release buckle; the quick release buckle is mounted on one side of the yaw-axis vertical bar; the slider is mounted between the yaw-axis vertical bar and the yaw-axis horizontal bar; and
   wherein the center of gravity adjusting device is locked when the quick release buckle is fastened and the slider is abutted between the yaw-axis vertical bar and the yaw-axis horizontal bar; and the center of gravity adjusting device is adjustable when the quick release buckle is unfastened and the slider is released from the yaw-axis vertical bar and the yaw-axis horizontal bar.
2. The gimbal structure according to aspect 1, wherein the quick release buckle comprises a rotating shaft and a rotating body sleeved on an outer peripheral of the rotating shaft; the rotating body is eccentric such that a center of the rotating body does not coincide with a center of the rotating shaft.
3. The gimbal structure according to aspect 2, wherein the quick release buckle further comprises a lug; the rotating body has a maximum radius and a minimum radius; the lug extends outward from a side of the rotating body away from the center of the rotating body; with the lug being pulled, the rotating body rotates around the rotating shaft from a portion having the maximum radius to a portion having the minimum radius.
4. The gimbal structure according to aspect 3, wherein the quick release mechanism further comprises a screw; the screw is inserted into the rotating shaft of the quick release buckle in a direction perpendicular to a side surface of the yaw-axis horizontal bar; the slider is connected to an end of the screw; with the lug being pulled, the screw drives the slider to move inward such that the slider is released from the yaw-axis vertical bar and the yaw-axis horizontal bar.
5. The gimbal structure according to aspect 1, wherein two clamping arms are provided at a top end of the yaw-axis vertical bar; the yaw-axis horizontal bar is received between the two clamping arms and carried on the top end of the yaw-axis vertical bar.
6. The gimbal structure according to aspect 5, wherein a first groove and a second groove spaced apart from each other are provided on an inner surface of each clamping arm facing the other clamping arm; a boss is provided at a lower end of the yaw-axis horizontal bar; the slider comprises a horizontal block and a vertical block; the horizontal block is received in the first groove, and the boss is received in the second grooves of the two clamping arms.
7. The gimbal structure according to aspect 6, wherein a recess is provided on a side surface of the yaw-axis horizontal bar; the vertical block is received in the recess; when the center of gravity adjusting device is locked by the quick release mechanism, the slider is abutted between the recess of the yaw-axis horizontal bar and the clamping arm.
8. The gimbal structure according to aspect 7, wherein a bottom surface of the recess of the yaw-axis horizontal bar is a slant surface; a bottom surface of the vertical block of the slider is an inclined surface having the same inclination angle as that of the slant surface; when the slider is received in the recess, the inclined surface of the slider is slidable relative to the slant surface of the recess of the yaw-axis horizontal bar, so as to abut the horizontal block of the slider in the first groove of the clamping arm to fix the slider and lock the yaw-axis horizontal bar and the clamping arm.
9. The gimbal structure according to aspect 1, wherein the gimbal structure further comprises a gear adjusting mechanism which comprising a gear, a gear rotating shaft connected to the gear and adjusting knobs disposed at two ends of the gear rotating shaft; an upper surface of the yaw-axis horizontal bar is provided with a rack with which the gear engages; and the gear is rotated by rotating the adjusting knobs to move the yaw-axis horizontal bar relative to the yaw-axis vertical bar.
10. The gimbal structure according to aspect 9, wherein the gear adjusting mechanism further comprises a gear fixing member fixed at a top end of the yaw-axis vertical bar; the gear fixing member comprises a head and two side walls; an opening is formed between the two side walls, and the gear is received in the opening.
11. The gimbal structure according to aspect 1, wherein the support frame is rotatably connected with the center of gravity adjusting device through a first motor, the first motor is mounted at a bottom end of the yaw-axis vertical bar of the support frame.
12. The gimbal structure according to aspect 11, wherein the gimbal structure further comprises a handheld frame; the handheld frame is rotatably connected with the center of gravity adjusting device through a second motor, the second motor is mounted at the other end of the yaw-axis horizontal bar of the center of gravity adjusting device which is away from the yaw-axis vertical bar.
13. The gimbal structure according to aspect 12, wherein the handheld frame comprises a horizontal rod and handles mounted on the horizontal rod.
14. The gimbal structure according to aspect 13, wherein the handheld frame comprises three handles, two of which are mounted respectively at two ends of the horizontal rod, and the remaining one is mounted at a middle portion of the horizontal rod.
15. A gimbal structure, said gimbal structure comprising a support frame,
   wherein the support frame comprises a roll-axis support, a yaw-axis vertical bar and a yaw-axis horizontal bar carried on the yaw-axis vertical bar; and
   wherein the gimbal structure further comprises a gear adjusting mechanism which comprising a gear, a gear rotating shaft connected to the gear and adjusting knobs provided at two ends of the gear rotating shaft; an upper surface of the yaw-axis horizontal bar is provided with a rack with which the gear engages; and the gear is rotated by rotating the adjusting knobs to move the yaw-axis horizontal bar relative to the yaw-axis vertical bar.
16. The gimbal structure according to aspect 15, wherein the gear adjusting mechanism further comprises a gear fixing member provided at a top end of the yaw-axis vertical bar; the gear fixing member comprises a head and two side walls; an opening is formed between the two side walls, and the gear is received in the opening.
17. A gear adjusting mechanism, said gear adjusting mechanism comprises a gear, a gear rotating shaft connected to the gear, adjusting knobs provided at two ends of the gear rotating shaft, and a rack engaged with the gear,
   wherein the gear adjusting mechanism further comprises a gear fixing member, the gear fixing member comprises a head and two side walls extending from the head; an opening is formed between the two side walls; the gear is received in the opening; the gear rotating shaft is rotatably connected on the two side walls; and the gear is rotated by rotating the adjusting knobs to move the rack.

## Claims

1. A gear adjusting mechanism, said gear adjusting mechanism comprises:
a gear;
a gear rotating shaft connected to the gear;
adjusting member provided at the gear rotating shaft; and
a gear fixing member, wherein the gear fixing member is configured to connect the gear rotating shaft and receive the gear, and the gear is rotatable by rotating the adjusting member.

2. The gear adjusting mechanism of claim 1, wherein the gear fixing member comprises a head and two side walls extending from the head, an opening is formed between the two side walls, the gear is received in the opening, and the gear rotating shaft is rotatably connected on the two side walls.

3. A gimbal structure, said gimbal structure comprising a support frame,
wherein the support frame comprises a roll-axis support, a yaw-axis vertical bar and a yaw-axis horizontal bar carried on the yaw-axis vertical bar; and
wherein the gimbal structure further comprises the gear adjusting mechanism according to claim 1 or 2, wherein an upper surface of the yaw-axis horizontal bar is provided with a rack with which the gear engages, and wherein the gear is rotatable by rotating the adjusting member to move the yaw-axis horizontal bar relative to the yaw-axis vertical bar.

4. The gimbal structure according to claim 3, wherein the gear fixing member is provided at a top end of the yaw-axis vertical bar.

5. The gimbal structure according to any one of claims 3 to 4, said gimbal structure comprising a center of gravity adjusting device connected with the support frame, wherein the center of gravity adjusting device is configured to slide the yaw-axis horizontal bar relative to the yaw-axis vertical bar to adjust the center of gravity of the gimbal structure;
wherein the center of gravity adjusting device comprises a quick release mechanism comprising a quick release buckle, a slider and a screw connecting the slider with the quick release buckle; the quick release buckle is mounted on one side of the yaw-axis vertical bar; the slider is mounted between the yaw-axis vertical bar and the yaw-axis horizontal bar; and
wherein the center of gravity adjusting device is locked when the quick release buckle is fastened and the slider is abutted between the yaw-axis vertical bar and the yaw-axis horizontal bar; and the center of gravity adjusting device is adjustable when the quick release buckle is unfastened and the slider is released from the yaw-axis vertical bar and the yaw-axis horizontal bar.

6. The gimbal structure according to claim 5, wherein the quick release buckle comprises a rotating shaft and a rotating body sleeved on an outer peripheral of the rotating shaft; the rotating body is eccentric such that a center of the rotating body does not coincide with a center of the rotating shaft.

7. The gimbal structure according to claim 6, wherein the quick release buckle further comprises a lug; the rotating body has a maximum radius and a minimum radius; the lug extends outward from a side of the rotating body away from the center of the rotating body; with the lug being pulled, the rotating body rotates around the rotating shaft from a portion having the maximum radius to a portion having the minimum radius.

8. The gimbal structure according to claim 7, wherein the quick release mechanism further comprises a screw; the screw is inserted into the rotating shaft of the quick release buckle in a direction perpendicular to a side surface of the yaw-axis horizontal bar; the slider is connected to an end of the screw; with the lug being pulled, the screw drives the slider to move inward such that the slider is released from the yaw-axis vertical bar and the yaw-axis horizontal bar.

9. The gimbal structure according to claim 5, wherein two clamping arms are provided at a top end of the yaw-axis vertical bar; the yaw-axis horizontal bar is received between the two clamping arms and carried on the top end of the yaw-axis vertical bar.

10. The gimbal structure according to claim 9, wherein a first groove and a second groove spaced apart from each other are provided on an inner surface of each clamping arm facing the other clamping arm; a boss is provided at a lower end of the yaw-axis horizontal bar; the slider comprises a horizontal block and a vertical block; the horizontal block is received in the first groove, and the boss is received in the second grooves of the two clamping arms.

11. The gimbal structure according to claim 10, wherein a recess is provided on a side surface of the yaw-axis horizontal bar; the vertical block is received in the recess; when the center of gravity adjusting device is locked by the quick release mechanism, the slider is abutted between the recess of the yaw-axis horizontal bar and the clamping arm

12. The gimbal structure according to claim 11, wherein a bottom surface of the recess of the yaw-axis horizontal bar is a slant surface; a bottom surface of the vertical block of the slider is an inclined surface having the same inclination angle as that of the slant surface; when the slider is received in the recess, the inclined surface of the slider is slidable relative to the slant surface of the recess of the yaw-axis horizontal bar, so as to abut the horizontal block of the slider in the first groove of the clamping arm to fix the slider and lock the yaw-axis horizontal bar and the clamping arm.

13. The gimbal structure according to claim 5, wherein the support frame is rotatably connected with the center of gravity adjusting device through a first motor, the first motor is mounted at a bottom end of the yaw-axis vertical bar of the support frame.

14. The gimbal structure according to claim 13, wherein the gimbal structure further comprises a handheld frame; the handheld frame is rotatably connected with the center of gravity adjusting device through a second motor, the second motor is mounted at the other end of the yaw-axis horizontal bar of the center of gravity adjusting device which is away from the yaw-axis vertical bar.

15. The gimbal structure according to claim 14, wherein the handheld frame comprises a horizontal rod and handles mounted on the horizontal rod. preferably wherein the handheld frame comprises three handles, two of which are mounted respectively at two ends of the horizontal rod, and the remaining one is mounted at a middle portion of the horizontal rod.
